(19) Europäisches Patentamt
European Patent Office
Office européen des brevets

(11) **EP 4 481 714 A1**

(12) **EUROPEAN PATENT APPLICATION**
published in accordance with Art. 153(4) EPC

(43) Date of publication:
**25.12.2024 Bulletin 2024/52**

(21) Application number: **22926052.6**

(22) Date of filing: **11.11.2022**

(51) International Patent Classification (IPC):
**G09B 9/00** (2006.01)   **G09B 19/00** (2006.01)
**G06T 7/00** (2017.01)

(52) Cooperative Patent Classification (CPC):
**G06T 7/00; G09B 9/00; G09B 19/00**

(86) International application number:
**PCT/JP2022/042033**

(87) International publication number:
**WO 2023/153036 (17.08.2023 Gazette 2023/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **14.02.2022 JP 2022020269**

(71) Applicant: **NS Solutions Corporation
Tokyo 105-6417 (JP)**

(72) Inventors:
• **TOKUTAKE, Masato**
  **Tokyo 105-6417 (JP)**
• **MORIYA, Kazuyoshi**
  **Tokyo 105-6417 (JP)**
• **SATO, Sei**
  **Tokyo 105-6417 (JP)**
• **TAKABATAKE, Norihiro**
  **Tokyo 105-6417 (JP)**

(74) Representative: **Vossius & Partner
Patentanwälte Rechtsanwälte mbB
Siebertstrasse 3
81675 München (DE)**

(54) **INFORMATION PROCESSING DEVICE, INFORMATION PROCESSING METHOD, PROGRAM, AND INFORMATION PROCESSING SYSTEM**

(57)   The present invention can assist in passing down techniques in a preferable mode. An information processing device builds a first trained model by training, on a basis of machine learning using second image data items on videos corresponding to task units constituting a series of tasks into which first image data on videos of performance situations of a series of tasks by each of a plurality of workers categorized into different groups is divided, the first trained model in a feature space regarding a relationship among a plurality of image data items in such a manner that differences in feature are made smaller for workers belonging to a common group, and differences in feature are made larger for workers belonging to different groups, and the information processing device evaluates a skill level of a first worker to be evaluated in a series of tasks on a basis of the first trained model and the first image data on a series of videos based on a result of imaging a performance situation of the series of tasks by the worker.

*FIG.1*

**Description**

TECHNICAL FIELD

The present disclosure relates to an information processing device, an information processing method, a program, and an information processing system.

BACKGROUND ART

Recent aging of engineers creates a problem of how to groom skilled persons and a problem of a lack of successors in the manufacturing industry and the like. Skilled techniques are typically passed down by a skilled person causing an unskilled person to have experiences through direct instruction, thus improving a skill level (in other words, a degree of mastery) of the unskilled person; however, such a method is not necessarily efficient and is not necessarily acknowledged to be sufficiently effective as passing down of techniques. Recently, various schemes for allowing a target engineer (e.g., an unskilled person) to master a technique efficiently have been studied. For example, Patent Literature 1 discloses an example of a learning assist system that assists an engineer in mastering a technique efficiently.

CITATION LIST

PATENT LITERATURE

Patent Literature 1: Japanese Laid-open Patent Publication No. 2020-144233

SUMMARY OF INVENTION

TECHNICAL PROBLEM

As described above, there is a recent demand for implementing a scheme for fulfilling passing down of techniques efficiently and more effectively; in particular, there is an expectation of introduction of a technique that can assist in passing down techniques more effectively through application of an information processing technology.
In view of the problems described above, the present invention proposes a technique that can assist in passing down techniques in a preferable mode.

SOLUTION TO PROBLEM

An information processing device according to the present embodiment includes a first model builder configured to build a first trained model by training, on a basis of machine learning using, as training data items, second image data items on partial videos corresponding to respective task units constituting a series of tasks into which first image data on a series of videos based on a result of imaging a performance situation of the series of tasks by each of a plurality of workers categorized into a plurality of groups different from one another is divided, the first trained model in a feature space regarding a relationship among a plurality of image data items in such a manner that, for workers belonging to a common group, differences in feature among a plurality of the second image data items corresponding to a common task unit are made smaller, and for workers belonging to different groups, differences in feature among the plurality of the second image data items corresponding to the common task unit are made larger, wherein on a basis of the first trained model and the first image data on a series of videos based on a result of imaging a performance situation of a series of tasks by a first worker to be evaluated, a skill level of the worker in the series of tasks is evaluated.
This allows, for example, an expectation of an effect of improving a skill level of an unskilled person in a task by giving feedback about a result of evaluating skill levels in various tasks to the unskilled person or a manager pertaining to managing the task, without direct instruction from a skilled person to the unskilled person.

ADVANTAGEOUS EFFECTS OF INVENTION

According to the present invention, it is possible to assist in passing down techniques in a preferable mode.

BRIEF DESCRIPTION OF DRAWINGS

[Fig. 1] Fig. 1 is a diagram illustrating an example of a system configuration of an information processing system.

[Fig. 2] Fig. 2 is a diagram illustrating an example of a hardware configuration of an information processing device.

[Fig. 3] Fig. 3 is a functional block diagram illustrating an example of a functional configuration of the information processing system.

[Fig. 4] Fig. 4 is a diagram illustrating an example of processing by a model building device.

[Fig. 5] Fig. 5 is a diagram illustrating an example of a result of dividing a task video into input unit videos.

[Fig. 6] Fig. 6 is a diagram illustrating an example of a result of labeling a task video.

[Fig. 7] Fig. 7 is a diagram illustrating an example of processing by the model building device.

[Fig. 8] Fig. 8 is a diagram for describing an example of processing pertaining to building a skill level evaluating model.

[Fig. 9] Fig. 9 is a diagram illustrating an example of processing by an evaluating device.

[Fig. 10] Fig. 10 is a diagram illustrating an example of a result of dividing a task video into task unit videos.

[Fig. 11] Fig. 11 is a diagram illustrating an example of processing by the evaluating device.

[Fig. 12] Fig. 12 is a diagram illustrating an example of a method of calculating an evaluation value regarding a skill level.

[Fig. 13] Fig. 13 is a diagram illustrating another example of the method of calculating an evaluation value regarding a skill level.

[Fig. 14] Fig. 14 is a diagram illustrating an example of a method of evaluating a skill level with a series of tasks being taken as a target.

[Fig. 15] Fig. 15 is a diagram illustrating an example of a method of outputting information based on a result of extracting a difference region.

DESCRIPTION OF EMBODIMENTS

A preferred embodiment of the present disclosure will be described below in detail with reference to the accompanying drawings. Note that, in the present specification and drawings, constituent components having substantially the same functional configurations are denoted by the same reference numerals, and the description thereof is not repeated herein.

<System Configuration>

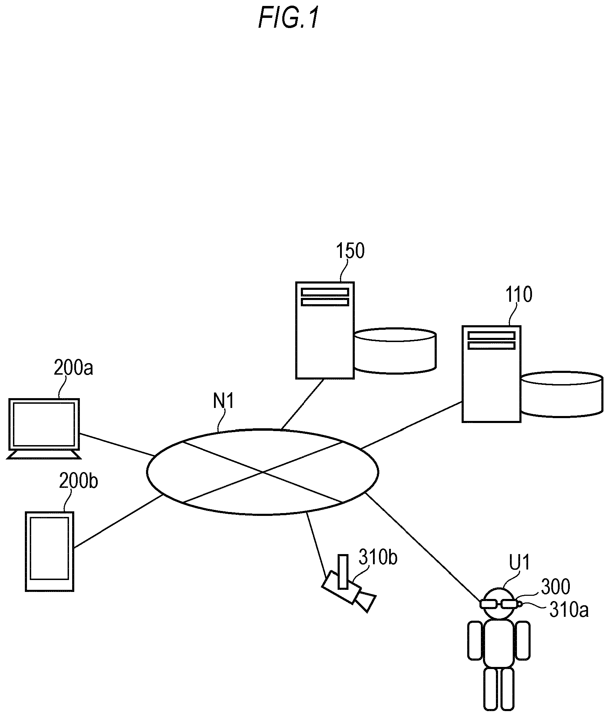

With reference to Fig. 1, an example of a system configuration of an information processing system according to an embodiment of the present disclosure will be described. An information processing system 1 according to the present embodiment includes a model building device 110, an evaluating device 150, one or more terminal devices 200, and one or more imaging devices 310. Note that terminal devices 200a and 200b illustrated in Fig. 1 each represent an example of the terminal device 200. In the following description, the terminal devices 200a and 200b will be simply referred to as a terminal device 200 when they are not particularly differentiated from each other. Imaging devices 310a and 310b illustrated in Fig. 1 each represent an example of the imaging device 310. The imaging device 310a schematically represents an imaging device supported by a wearable device 300 (e.g., a glasses-type device, etc.) that is used while worn by a user U1. The imaging device 310b schematically represents an imaging device that is installed so as to image the user U1 from a third-person point of view (e.g., an imaging device that is installed at a predetermined location). Note that, in the following description, the imaging devices 310a and 310b will be simply referred to as an imaging device 310 when they are not particularly differentiated from each other.

The imaging device 310 images a surrounding situation of the user U1 being a target and outputs data on an image (e.g., a still image or a video) based on a result of imaging, to a predetermined output destination.

Note that a location to install the imaging device 310, a method of installing the imaging device 310, and the like are not particularly limited as long as the imaging device 310 can image the surrounding situation of the user U1 being a target and may be changed as appropriate in accordance with an area of activity of the user UI, characteristics of a task to be performed by the user U1, and the like.

For example, the imaging device 310a illustrated in Fig. 1 is supported by the wearable device 300 and is used while the wearable device 300 is worn by the user U1. With such a configuration, for example, it is possible to obtain what is called an image from a first-person point of view in which a scene in a direction of a line of sight of the user U1 is imaged.

As another example, the imaging device 310b illustrated in Fig. 1 is used, for example, in a state of being installed at a predetermined location. With such a configuration, for example, it is possible to image the user U1 and the surrounding situation of the user U1 from the third-person point of view.

The number of imaging devices 310 is not limited to one, and a plurality of imaging devices 310 may be used. Note that, in the present embodiment, the number of imaging devices 310 is assumed to be one so as to allow features of the information processing system 1 to be understood more easily.

The model building device 110, the evaluating device 150, the terminal device 200, and imaging device 310 are connected together via a network N1 so as to transmit and receive information to and from one another.

Note that a type of the network N1 is not particularly limited. As a specific example, the network N1 may be configured on the Internet, a dedicated line, a local area network (LAN), a wide area network (WAN), or the like. The network N1 may be configured on a wired network or may be configured on a wireless network such as a network based on a communications standard such as 5G, long term evolution (LTE), or Wi-Fi (registered trademark). The network N1 may include a plurality of networks, and to one or some of the networks, a network type different from a network type of the other networks may be applied. It is only required that communication among the various information processing devices mentioned above is logically established, and the communication among the various information processing devices may be physically relayed by another communication device or the like.

The terminal device 200 plays a role of an interface pertaining to receiving an input (e.g., various instructions) from the user and presenting various types of information (e.g., feedback, etc.) to the user. As a specific example, the terminal device 200 may receive data from the model building device 110 and the evaluating device 150 described later via the network and may present information based on the data to the user via a predetermined outputting device (e.g., a display, etc.). The terminal device 200 may recognize an instruction from a user on a basis of an operation received from the user via a predetermined inputting device (e.g., a touch panel, etc.) and transmit information based on the instruction to the model building device 110 or the evaluating device 150 via the network. This enables the model building device 110 or the evaluating device 150 to recognize an instruction from a user and execute processing based on the instruction.

The terminal device 200 can be implemented by, for example, an information processing device having a communication function, such as what is called a smartphone, a tablet computer, or a personal computer (PC) .

The model building device 110 and the evaluating device 150 are each implemented by what is called a server device and each provide various functions pertaining to evaluating a skill level of a worker to be evaluated in a predetermined task. Note that a target of skill level evaluation can be set as appropriate in accordance with characteristics of a task, an object of an analysis, an evaluation criterion, and the like. As a specific example, a safety in a task (self security, security of other persons, etc.), a speed of the task, or a quality of the task (accuracy in processing a product, accuracy in sorting, etc.) can be set as the target of skill level evaluation.

The model building device 110 executes various types of processing pertaining to building what is called a trained model such as a recognizer or a discriminator, on a basis of what is called machine learning.

Specifically, the model building device 110 according to the present embodiment executes processing pertaining to building a trained model to be used to divide a video based on a result of imaging a performance situation of a series of tasks into partial videos corresponding to individual tasks (hereafter, will be also referred to task units) constituting the series of tasks. Hereinafter, the trained model will be also referred to as a "task video dividing model" for the sake of convenience. The task video dividing model is a trained model that, upon receiving image data on a video based on a result of imaging a performance situation of a desired task, infers which task unit's performance situation is depicted by a scene imaged in the video, and outputs information based on a result of the inference. The task video dividing model is equivalent to an example of a "second trained model."

The model building device 110 also executes processing pertaining to building a trained model to be used to evaluate a skill level of a worker to be evaluated in a task. Hereinafter, the trained model will be also referred to as a "skill level evaluating model" for the sake of convenience. The skill level evaluating model is built on a basis of a result of learning a feature space regarding a relationship among image data items on videos based on results of imaging performance situations of a task by workers. Using such a skill level evaluating model enables, for example, evaluation about to which group of workers (e.g., skilled persons, unskilled persons, etc.) a worker to be evaluated belongs, and evaluation (e.g., quantitative evaluation) of differences among performance situations of a task by a plurality of different workers. The skill level evaluating model is equivalent to an example of a "first trained model." The worker to be evaluated is equivalent to an example of a "first worker."

Note that characteristics of the task video dividing model and the skill level evaluating model, and processing pertaining to building these models by the model building device 110 will be separately described later in detail.

The evaluating device 150 performs various types of determination and evaluation using the trained models built by the model building device 110.

Specifically, the evaluating device 150 according to the present embodiment obtains image data on a video based on a result of imaging a performance situation of a series of tasks by a worker to be evaluated and evaluates a skill level of the worker in the tasks using the image data and the skill level evaluating model. At this time, the evaluating device 150 may divide the video corresponding to the obtained image data into partial videos of task units constituting the series of tasks imaged in the video and then evaluate a skill level in each task unit on a basis of image data items on the divided videos. The evaluating device 150 may use the task video dividing model to divide the video represented by the obtained image data into the partial videos of the task units.

Note that the processing by the evaluating device 150 will be separately described later in detail.

Note that the configuration illustrated in Fig. 1 is merely an example and does not necessarily limit the system configuration of the information processing system 1 according to the present embodiment. As a specific example, the model building device 110 and the evaluating device 150 may be integrally configured. The model building device 110 or the evaluating device 150 may play a role of the terminal device 200. That is, a server device equivalent to the model building device 110 or the evaluating device 150 may receive an input of various types of information from a user and may present various types of information to the user. Alternatively, constituent components equivalent to the model building device 110 and the evaluating device 150 may be implemented by cooperation of a plurality of devices. As a specific example, the constituent components equivalent to the model building device 110 and the evaluating device 150 may be implemented as what is called a cloud computing service. In this case, the cloud computing service may be implemented by cooperation of a plurality of server devices.

<Hardware Configuration>

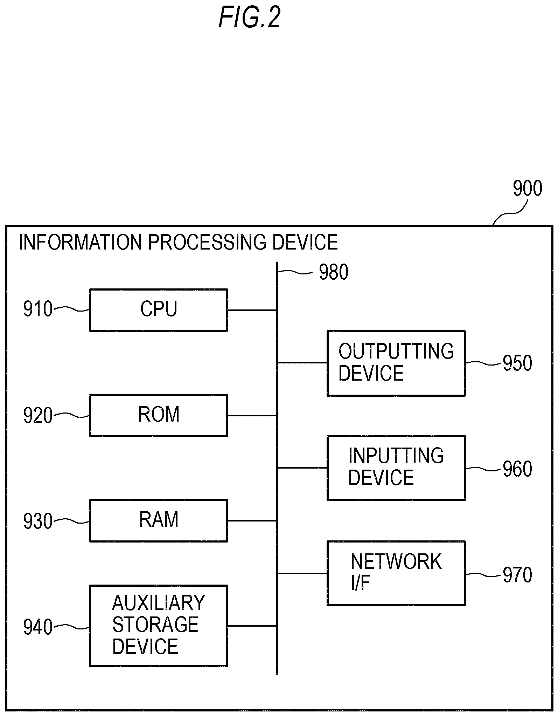

With reference to Fig. 2, an example of a hardware configuration of an information processing device 900 that is applicable to each of various devices constituting the information processing system 1 according to the present embodiment illustrated in Fig. 1 (e.g., the model building device 110, the evaluating device 150, the terminal device 200, and the wearable device 300, etc.) will be described. The information processing device 900 includes a central processing unit (CPU) 910, a read only memory (ROM) 920, a random access memory (RAM) 930, an auxiliary storage device 940, and a network I/F 970. The information processing device 900 may also include at least any one of an outputting device 950 and an inputting device 960. The CPU 910, the ROM 920, the RAM 930, the auxiliary storage device 940, the outputting device 950, the inputting device 960, and the network I/F 970 are mutually connected via a bus 980.

The CPU 910 is a central processing unit that controls various operations of the information processing device 900. For example, the CPU 910 may control operation of the entire information processing device 900. The ROM 920 stores a control program, a boot program, and the like that are executable by the CPU 910. The RAM 930 is a main memory for the CPU 910 and is used as a work area or a temporal storage area for loading various programs.

The auxiliary storage device 940 stores various types of data and various programs. The auxiliary storage device 940 is implemented by a storage device capable of temporarily or persistently storing the various types of data, such as a hard disk drive (HDD) or a nonvolatile memory, which is typified by a solid state drive (SSD).

The outputting device 950 is a device that outputs various types of information, and is used to present various types of information to a user. For example, the outputting device 950 may be implemented by a displaying device such as a display and present information to a user by displaying various types of indication information. As another example, the outputting device 950 may be implemented by a sound outputting device that outputs a voice or a sound such as an electronic sound and present information to a user by outputting a voice or a sound such as telegraphic communication. As seen from the above, a device to be applied as the outputting device 950 may be changed as appropriate in accordance with a medium to be used to present information to a user. Note that the outputting device 950 is equivalent to an example of an "outputting unit" to be used to present various types of information.

The inputting device 960 is used to receive various instructions from a user. For example, the inputting device 960 may include an inputting device such as a mouse, a keyboard, or a touch panel. As another example, the inputting device 960 may include a sound collecting device such as a microphone and collect a voice uttered by a user. In this case, the collected voice may be subjected to various types of analytical processing such as acoustic analysis and natural language processing, and content represented by this voice may be thereby recognized as an instruction from a user. As seen from the above, a device to be applied as the inputting device 960 may be changed as appropriate in accordance with a method of recognizing an instruction from a user. Alternatively, a plurality of types of devices may be applied as the inputting device 960.

The network I/F 970 is used for communication with an external device via the network. Note that a device to be applied as the network I/F 970 may be changed as appropriate in accordance with a type of a communication route and a communications system.

A program for the information processing device 900 may be, for example, provided to the information processing device 900 by a recording medium such as a CD-ROM or downloaded via the network or the like. In a case where the program is provided to the information processing device 900 by a recording medium, the program recorded in the recording medium is installed on the auxiliary storage device 940 by inserting the recording medium into a predetermined drive.

The configuration illustrated in Fig. 2 is merely an example and does not necessarily limit the hardware configuration of information processing devices constituting the information processing system 1 according to the present embodiment. As a specific example, one or some of the components such as the inputting device 960 or the outputting device 950 need not be included. As another example, a component corresponding to a function implemented by the information processing device 900 may be added as appropriate.

An example of the hardware configuration of the information processing device 900 applicable to each of various devices constituting the information processing system 1 according to the present embodiment illustrated in Fig. 1 has been described above with reference to Fig. 2.

functional Configuration>

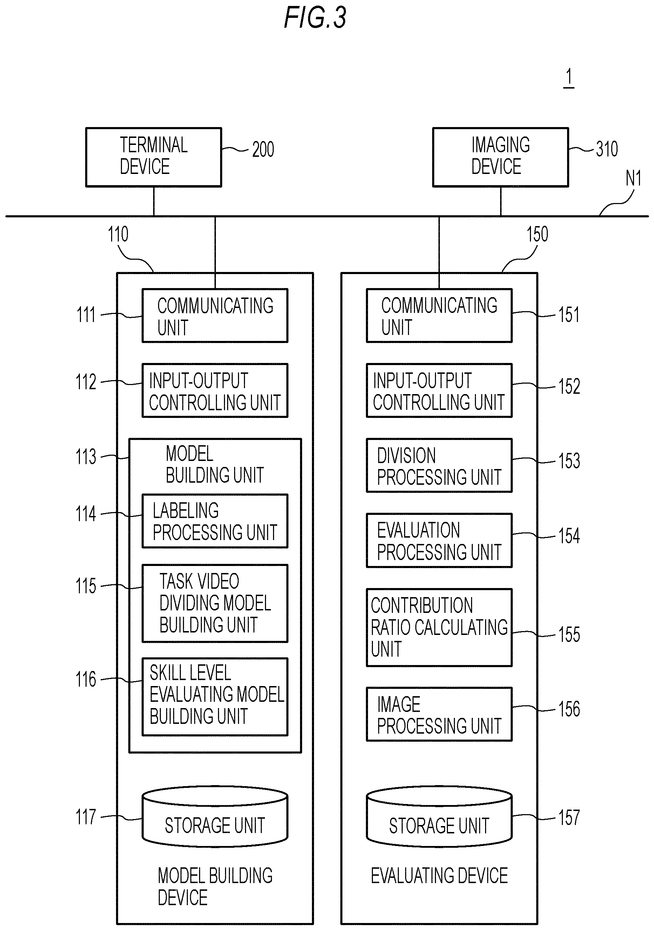

With reference to Fig. 3, an example of a functional configuration of the information processing system 1 according to the present embodiment will be described, particularly focusing on configurations of the model building device 110 and the evaluating device 150.

The configuration of the model building device 110 will be first described. The model building device 110 includes a communicating unit 111, an input-output controlling unit 112, a model building unit 113, and a storage unit 117.

The communicating unit 111 is a communication interface for constituent components of the model building device 110 to transmit and receive information to and from other devices (e.g., the terminal device 200, the imaging device 310, and the evaluating device 150, etc.) via the network N1. The communicating unit 111 can be implemented by, for example, the network I/F 970. Note that, in the following description, when the constituent components of the model building device 110 transmit and receive information to and from the other devices, the information is assumed to be transmitted and received via the communicating unit 111 unless otherwise described.

The storage unit 117 schematically represents a storage area for storing various types of data, various programs, and the like. For example, the storage unit 117 may store data and a program for the constituent components of the model building device 110 to execute processing.

The storage unit 117 may also store data (e.g., training data) to be used to build various trained models (e.g., the task video dividing model, the skill level evaluating model, etc.). The storage unit 117 may also store, for example, data generated in a process of building the various trained models and may also store data on the various trained models having been built.

The input-output controlling unit 112 executes various types of processing pertaining to presenting various types of information to a user (e.g., a manager) and receiving an input of information (e.g., an instruction, etc.) from the user. For example, the input-output controlling unit 112 may execute processing pertaining to presenting a predetermined user interface (UI) via the terminal device 200 and processing pertaining to receiving an input via the UI. This enables the model building device 110 to recognize an instruction from a user and present a result of processing based on the instruction to the user.

The model building unit 113 executes processing pertaining to building trained models such as the task video dividing model and the skill level evaluating model mentioned above. The model building unit 113 includes a labeling processing unit 114, a task video dividing model building unit 115, and a skill level evaluating model building unit 116.

The labeling processing unit 114 associates target data (e.g., image data on a video) with information represented by the data as auxiliary information. In other words, the labeling processing unit 114 labels the target data with the information representing the data.

As a specific example, the labeling processing unit 114 may associate image data on a video based on a result of imaging a performance situation of a task with information representing the task (e.g., information representing a task unit) as auxiliary information. At this time, the labeling processing unit 114 may associate target image data with a specified label (e.g., information representing a task unit) in accordance with an instruction from a manager.

Data associated with auxiliary information by the labeling processing unit 114 (i.e., labeled data) is used as, for example, training data pertaining to building a trained model.

The task video dividing model building unit 115 executes processing pertaining to building the task video dividing model and based on supervised machine learning using, as the training data, image data on a video that is labeled with information representing a task performed by a worker imaged as a subject.

Specifically, the task video dividing model building unit 115 compares information that is output as a result of inference from the task video dividing model receiving image data on a video with a result of labeling the image data by the labeling processing unit 114. Subsequently, the task video dividing model building unit 115 updates a parameter of the task video dividing model (e.g., a parameter pertaining to inferring a task unit) in such a manner as to bring the information output as the result of the inference from the task video dividing model closer to the result of the labeling by the labeling processing unit 114.

The task video dividing model built by the task video dividing model building unit 115 is used to divide image data on a video by the evaluating device 150 described later.

Note that a location to place data on the task video dividing model built by the task video dividing model building unit 115, a method of deploying the task video dividing model, and the like are not particularly limited as long as the evaluating device 150 can refer to the task video dividing model.

As a specific example, the data on the task video dividing model built by the task video dividing model building unit 115 may be transmitted to the evaluating device 150 via the network N1 and stored in a storage unit 157 of the evaluating device 150. As another example, by storing the data on the task video dividing model in a recording medium externally attachable to the model building device 110, the data on the task video dividing model may be stored in the storage unit 157 of the evaluating device 150. This enables the evaluating device 150 to refer to the task video dividing model stored in a form of data in the storage unit 157.

As still another example, the evaluating device 150 may refer to the task video dividing model that is stored in a form of data in a storage area of another device by accessing the other device via the network N1. In this case, the data on the task video dividing model may be stored in the storage unit 117 of the model building device 110 (equivalent to an example of the other device, which is different from the evaluating device 150) or may be stored in a storage area of another device that is configured as a network storage, a database system, or the like.

The task video dividing model may be used to divide image data on a target video when the skill level evaluating model building unit 116 described later builds the skill level evaluating model.

The skill level evaluating model building unit 116 executes processing pertaining to building the skill level evaluating model and based on a type of machine learning that is referred to as metric learning. Specifically, with a plurality of image data items on videos based on results of imaging performance situations of a task (task units) by workers being used as training data items, the skill level evaluating model is built on a basis of a result of learning a feature space regarding a relationship among the plurality of image data items.

At this time, the skill level evaluating model building unit 116 builds the skill level evaluating model in such a manner that, for workers belonging to a common group, differences in features among a plurality of image data items corresponding to a common task unit are made smaller. The skill level evaluating model building unit 116 also builds the skill level evaluating model in such a manner that, for workers belonging to different groups, differences in features among a plurality of image data items corresponding to a common task unit are made larger.

For example, for a plurality of image data items based on results of imaging performance situations of a common task by a plurality of workers equivalent to skilled persons, this makes differences in features (in other words, feature vectors) output from the skill level evaluating model receiving the image data items smaller. In addition, for a plurality of image data items based on results of imaging performance situations of a common task by a common worker, differences in features output from the skill level evaluating model receiving the image data items are also made smaller.

In contrast, for a plurality of image data items based on results of imaging performance situations of a common task by a plurality of workers belonging to groups different from one another, such as skilled persons and unskilled persons, differences in features output from the skill level evaluating model receiving the image data items are made larger.

The skill level evaluating model built by the skill level evaluating model building unit 116 is used to evaluate skill levels of a worker to be evaluated in various tasks by the evaluating device 150 described later.

Note that a location to place data on the skill level evaluating model built by the skill level evaluating model building unit 116, a method of deploying the task video dividing model, and the like are not particularly limited as long as the evaluating device 150 can refer to the skill level evaluating model. This is the same as the case of the task video dividing model mentioned above, and thus detailed description thereof will be omitted.

Next, the configuration of the evaluating device 150 will be described. The evaluating device 150 includes a communicating unit 151, an input-output controlling unit 152, a division processing unit 153, an evaluation processing unit 154, a contribution ratio calculating unit 155, an image processing unit 156, and the storage unit 157.

The communicating unit 151 is a communication interface for constituent components of the evaluating device 150 to transmit and receive information to and from other devices (e.g., the terminal device 200, the imaging device 310, and the model building device 110, etc.) via the network N1. The communicating unit 111 can be implemented by, for example, the network I/F 970. Note that, in the following description, when the constituent components of the evaluating device 150 transmit and receive information to and from the other devices, the information is assumed to be transmitted and received via the communicating unit 151 unless otherwise described.

The storage unit 157 schematically represents a storage area for storing various types of data, various programs, and the like. For example, the storage unit 157 may store data and a program for the constituent components of the evaluating device 150 to execute processing.

The storage unit 157 may also store image data on a video based on a result of imaging by the imaging device 310. The storage unit 157 may also store data on a trained model (e.g., the task video dividing model, the skill level evaluating model, etc.) built on a basis of machine learning by the model building device 110. The storage unit 117 may also store, for example, data generated in a process of evaluating a skill level of a worker to be evaluated in a task or may store, for example, information based on a result of the evaluation.

The input-output controlling unit 152 executes various types of processing pertaining to presenting various types of information to a user (e.g., a manager) and receiving an input of information (e.g., an instruction, etc.) from the user. For example, the input-output controlling unit 152 may execute processing pertaining to presenting a predetermined user interface (UI) via the terminal device 200 and processing pertaining to receiving an input via the UI. This enables the evaluating device 150 to recognize an instruction from a user and present a result of processing based on the instruction to the user.

The division processing unit 153 divides image data on a video based on a result of imaging a performance situation of a series of tasks into image data items on task units constituting the series of tasks. At this time, the division processing unit 153 may use the task video dividing model built by the task video dividing model building unit 115 mentioned above to divide the image data on the video based on the result of imaging the performance situation of the series of tasks. By dividing the image data on the video in the above manner, for example, it is also possible to extract image data on a video corresponding to a performance situation of a desired task unit from the image data on the video based on the result of imaging the performance situation of the series of tasks. Note that the image data on the video based on the result of imaging the performance situation of the series of tasks (e.g., a series of tasks including one or more task units) is equivalent to an example of "first image data," and the image data items on the task units into which the first image data is divided are each equivalent to an example of a "second image data item."

The evaluation processing unit 154 evaluates a skill level of a worker to be evaluated in a series of tasks on a basis of image data on a video based on a result of imaging a performance situation of the series of tasks by the worker and the skill level evaluating model built by the skill level evaluating model building unit 116 mentioned above.

As a specific example, the evaluation processing unit 154 may evaluate a skill level of a worker to be evaluated in a series of tasks on a basis of a positional relationship in a feature space between sets of features of image data items corresponding to the worker to be evaluated and a worker serving as an evaluation criterion (e.g., a skilled person).

As another example, the evaluation processing unit 154 may evaluate a skill level of a worker to be evaluated in a series of tasks in accordance with to which group a worker corresponding to a set of features that is closest in the feature space to a set of features of image data corresponding to the worker to be evaluated belongs.

The evaluation processing unit 154 may evaluate a skill level of a worker to be evaluated for each task unit or may evaluate a skill level of a worker to be evaluated in the entire series of tasks including a series of task units on a basis of results of evaluation in the series of task units.

Note that an example of processing pertaining to evaluating a skill level of a worker to be evaluated in a series of tasks by the evaluation processing unit 154 will be separately described later in detail.

The contribution ratio calculating unit 155 calculates, in evaluation of the skill level by the evaluation processing unit 154, ratios of contribution of regions in each of images represented by image data used for the evaluation (e.g., still images corresponding to at least some of frames in a video), to the evaluation (particularly, ratios of contribution to an output of the skill level evaluating model constituting a factor for the evaluation).

As a specific example, it is assumed that an unskilled person is a worker to be evaluated, a skilled person is a worker taken as an evaluation criterion, and, in a case where the unskilled person is evaluated to be unskilled, a ratio of contribution to the evaluation is calculated. In this case, for example, the contribution ratio calculating unit 155 may calculate ratios of contribution of parts in a target image, on a basis of a determination that a part where movements of the unskilled person and the skilled person are different from each other (e.g., a part in a still image that shows different bit values between the unskilled person and the skilled person) contributes more to the above evaluation.

As another example, it is assumed that an unskilled person is a worker to be evaluated, a skilled person is a worker taken as an evaluation criterion, and, in a case where the unskilled person is evaluated to be skilled, a ratio of contribution to the evaluation is calculated. In this case, for example, the contribution ratio calculating unit 155 may calculate ratios of contribution of parts in a target image, on a basis of a determination that a part where movements of the unskilled person and the skilled person are more similar to each other (e.g., a part in a still image that shows bit values closer to each other between the unskilled person and the skilled person) contributes more to the above evaluation.

Note that, for the evaluation of the ratios of contribution as mentioned above, a known technique such as a technique referred to as gradient-weighted class activation mapping (GradCAM) can be used.

The image processing unit 156 subjects a target image to various types of image processing. For example, the image processing unit 156 may superimpose information based on a result of calculating a ratio of contribution by the contribution ratio calculating unit 155 on an image that is taken as a target of processing by the contribution ratio calculating unit 155. As a more specific example, the image processing unit 156 may subject an image to image processing such that a result of calculating a ratio of contribution is distinguishably displayed superimposed on a region in the image that is a source of calculating the ratio of contribution by the contribution ratio calculating unit 155.

The image processing unit 156 then outputs information based on a result of the image processing to a predetermined output destination. For example, the image processing unit 156 may output the image that has been subjected to the image processing to the input-output controlling unit 152. This enables the input-output controlling unit 152 to display the image that has been subjected to the image processing in a predetermined region on the UI, thus presenting the image to a user (e.g., a manager).

Note that the configuration mentioned above is merely an example, and the functional configuration of the information processing system 1 (particularly, functional configurations of the model building device 110 and the evaluating device 150) is not necessarily limited to the example illustrated in Fig. 3.

For example, the series of constituent components of the model building device 110 may be implemented by cooperation of a plurality of devices. As a specific example, a part of the series of constituent components of the model building device 110 may be externally attached to the model building device 110. As another example, a load pertaining to processing by at least a part of the series of constituent components of the model building device 110 may be distributed among a plurality of devices. These hold true for the evaluating device 150.

As another example, the model building device 110 and the evaluating device 150 may be integrally configured.

That is, a series of constituent components of each of the model building device 110 and the evaluating device 150 may be implemented as constituent components of a common server device.

An example of the functional configuration of the information processing system 1 according to the present embodiment has been described above with reference to Fig. 3, particularly focusing on the configurations of the model building device 110 and the evaluating device 150.

<Processing>

An example of processing by the information processing system according to the present embodiment will be described, divided into a preprocessing stage that is pertaining to building a trained model and executed by the model building device 110 and a main processing stage that is pertaining to evaluation using the built trained model and executed by the evaluating device 150.

(Preprocessing Stage)

As an example of processing in a preprocessing stage, processing pertaining to building the task video dividing model and processing pertaining to building the skill level evaluating model will be individually described.

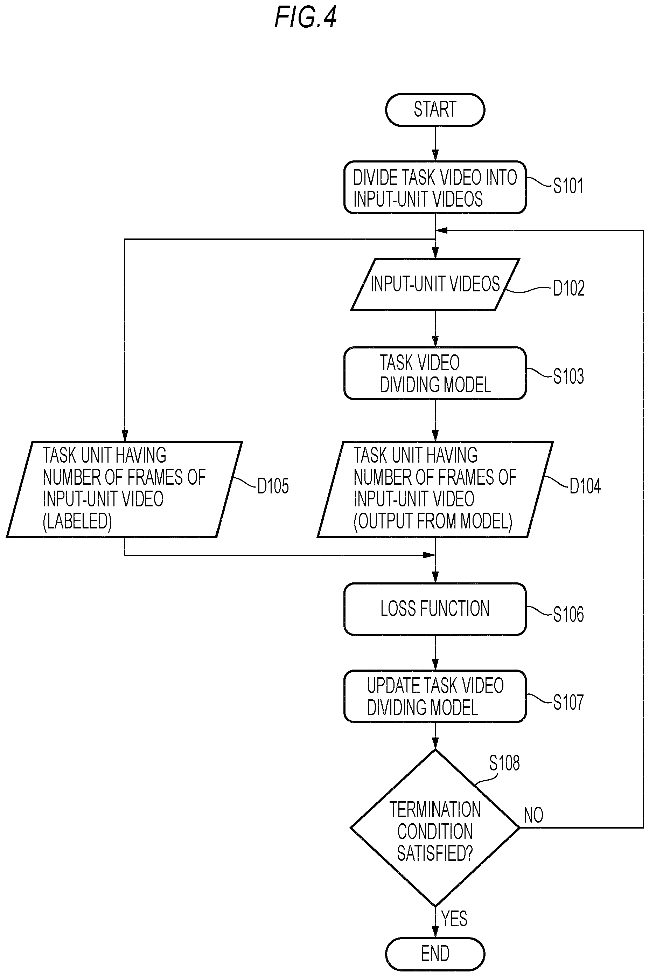

First, with reference to Fig. 4, an example of processing pertaining to building the task video dividing model by the model building device 110 will be described. Fig. 4 is a diagram illustrating the example of processing pertaining to building the task video dividing model by the model building device 110.

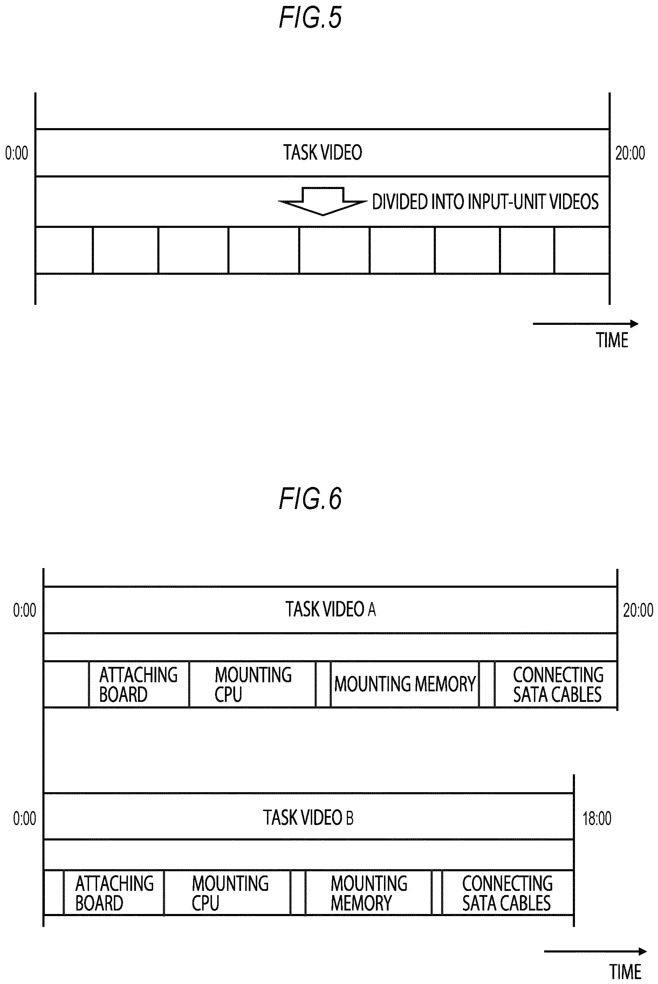

In S101, the model building device 110 divides a video represented by image data to be used to build the task video dividing model (what is called sample data) into partial videos each having a predetermined period (e.g., a fixed number of frames) in chronological order and generates image data items on the partial videos. Note that, in the following description, the video before the division will be also referred to as a "task video," and the partial videos into which the task video is divided and each of which has the predetermined period will be also referred to as "input unit videos," for the sake of convenience. For example, Fig. 5 illustrates an example of a case where a task video is divided into input unit videos. D102 illustrated in Fig. 4 represents image data items on a series of input unit videos into which the task video is divided in S101.

In S103, the model building device 110 inputs image data items D102 on the series of input unit videos into which the task video is divided in S101, into the task video dividing model. This causes the task video dividing model to output, for an image data item D102 on each of the series of input unit videos into which the task video is divided, information that represents a result of inferring which task unit's performance situation is depicted by a scene imaged in the input unit video. At this time, the task video dividing model may output, for each of frames constituting the input unit video, information that represents a result of inferring which task unit's performance situation is depicted by a scene image in the frame. As seen from the above, by outputting a result of inference for each frame, an effect of improving an accuracy pertaining to evaluating a skill level can be expected. As a specific example, in a case where scenes of a plurality of tasks are imaged in one input unit video, outputting a result of inference for each frame makes it possible to obtain a result of inference for each of the plurality of tasks. In such a case, it is possible to evaluate a skill level more in detail compared with a case where a result of inference is output for each input unit video. D104 schematically represents an image data item on an input unit video that is labeled with information based on a result of inference by the task video dividing model, that is, information based on a result of inferring a task unit depicted by a scene imaged in the input unit video.

Aside from a process of S103, the model building device 110 labels image data that is input into the task video dividing model with information that represents a ground truth on which task unit's performance situation is depicted by a scene imaged in an input unit video represented by the image data (hereinafter, will be also referred to as ground truth information). Processing of the labeling, in other words, processing pertaining to applying an annotation to image data on an input unit video is performed on a basis of, for example, an instruction from a manager. D105 schematically represents an image data item on the input unit video that has been labeled with the ground truth information. The image data item D105 on the input unit video labeled with the ground truth information is equivalent to an example of training data in the supervised learning pertaining to building the task video dividing model.

Here, with reference to Fig. 6, an example of a result of labeling a task video (i.e., a series of input unit videos) will be described with a specific example. Fig. 6 illustrates the example of a result of labeling a task video that is a source of division into input unit videos (a result of applying annotations). The example illustrated in Fig. 6 shows an example of a result of processing of labeling a task video of a series of tasks pertaining to assembling a personal computer (PC). Specifically, the series of tasks pertaining to assembling a PC includes the tasks "attaching a board," "mounting a CPU", "mounting a memory, "and "connecting SATA cables," as task units. Note that, as in the example illustrated in Fig. 6, a length of a task video and lengths of task unit videos may differ among videos even in situations in which the same task is performed.

Here, refer to Fig. 4 again. In S106, on a basis of the image data item D104 on the input unit video labeled with the result of inference by the task video dividing model and the image data item D105 labeled with the ground truth information, the model building device 110 calculates a deviation of the inference by the task video dividing model with respect to the ground truth information. As a specific example, the model building device 110 may calculate a magnitude of the deviation (i.e., Loss) of the result of inference by the task video dividing model with respect to the ground truth information by applying what is called a loss function to the image data items D104 and D105.

In S107, on a basis of the deviation of the result of inference by the task video dividing model with respect to the ground truth information calculated in S106, the model building device 110 updates the task video dividing model. Specifically, the model building device 110 updates the parameter of the task video dividing model (i.e., the parameter pertaining to inferring a task unit) in such a manner as to bring the result of inference by the task video dividing model closer to the ground truth information.

In S108, the model building device 110 determines whether a termination condition has been satisfied. As a specific example, the model building device 110 may determine that the termination condition has been satisfied when image data items on the series of input unit videos (e.g., image data items on the series of input unit videos into which the task video is divided in S101) have been subjected to processes of S103 to S107.

When determining in S108 that the termination condition has not been satisfied, the model building device 110 causes the processing to proceed to S103. In this case, the model building device 110 executes the processes of S103 to S107 on an image data item D102 on an input unit video that has not been subjected to the processes yet.

Then, when determining in S108 that the termination condition has been satisfied, the model building device 110 terminates the series of processes illustrated in Fig. 4.

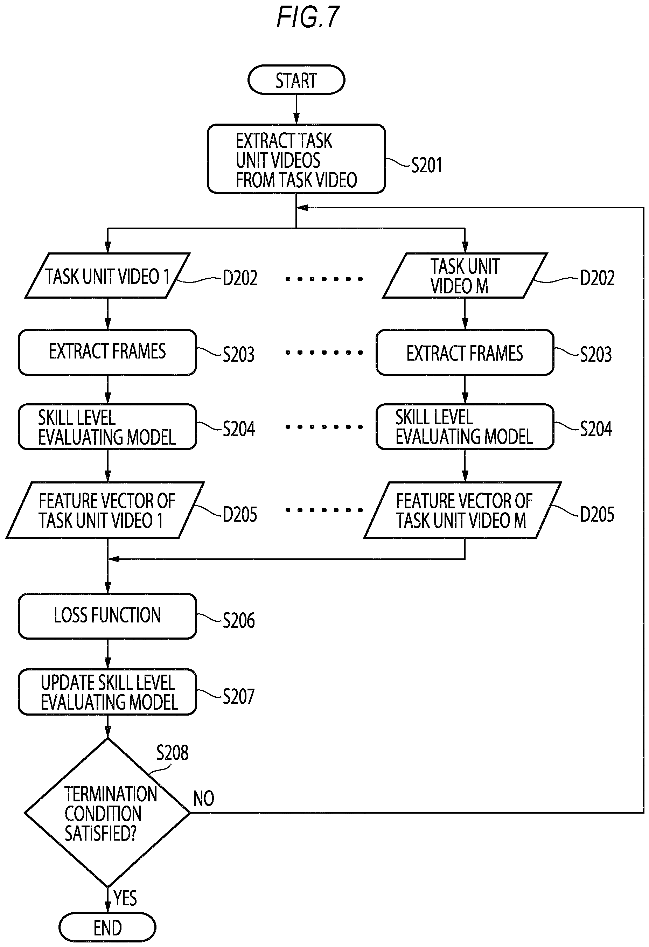

Next, with reference to Fig. 7, an example of processing pertaining to building the skill level evaluating model by the model building device 110 will be described. Fig. 7 is a diagram illustrating the example of processing pertaining to building the skill level evaluating model by the model building device 110.

In S201, the model building device 110 extracts task unit videos from task videos represented by a series of image data items to be used to build the skill level evaluating model (what are called sample data items), thus generating image data items corresponding to the task unit videos. Note that, in the example illustrated in Fig. 7, it is assumed that M image data items are taken as targets, and from task videos represented by the M image data items, the task unit videos are individually extracted. D202 schematically represents image data items on task unit videos that are extracted from task videos represented by the M image data items. That is, in a case of the example illustrated in Fig. 7, when attention is focused on a desired task unit, task unit videos corresponding to the task unit are extracted from the task videos represented by the M image data items. Thus, hereinafter, task unit videos extracted from task videos represented by M image data items 1 to M will be also referred to as task unit videos 1 to M for the sake of convenience. That is, it is assumed that the task unit video M represents a task unit video extracted from the task video represented by the image data item M.

Note that a method of extracting the image data items on the task unit videos from the image data items on the task videos is not particularly limited as long as the image data items on the task unit videos can be extracted from the image data items on the task videos. As a specific example, image data items on task unit videos may be generated by extracting the task unit videos from task videos represented by desired image data items in accordance with an instruction from a user. As another example, image data items on task unit videos corresponding to a desired task unit may be extracted by using a result of dividing image data on a task video into image data items on task unit videos using the task video dividing model built by the processing illustrated in Fig. 4.

In S203, taking the task unit videos 1 to M corresponding to a common task unit as targets, the model building device 110 extracts, from each task unit video, frames to be input into the skill level evaluating model. At this time, the model building device 110 may extract a predetermined number of frames from each of the task unit videos 1 to M such that an input dimension (in other words, the number of frames) for the skill level evaluating model is fixed for the task unit videos 1 to M. In this case, the model building device 110 may control intervals between frames to be extracted so as to extract the predetermined number of frames from each of the task unit videos 1 to M.

Specifically, the numbers of frames (in other words, lengths of videos) of the task unit videos 1 to M are not necessarily the same. Therefore, the model building device 110 may perform control such that, for example, intervals between frames to be extracted are made longer for a task unit video with a larger number of frames, so that the same number of frames are extracted from each of the task unit videos 1 to M. As a more specific example, it is assumed that ten frames are extracted from each task unit video. In this case, when a total number of frames of a task unit video to be extracted is 30, the model building device 110 may extract every third frame to extract the ten frames in total. As another example, when a total number of frames of a task unit video to be extracted is 20, the model building device 110 may extract every second frame to extract the ten frames in total.

In S204, the model building device 110 inputs image data items corresponding to the series of frames extracted from each of the task unit videos 1 to M into the skill level evaluating model. This causes the skill level evaluating model to output, for each of the task unit videos 1 to M, information that represents a position based on features of the task unit video in a feature space (hereinafter, will be also referred to as a feature vector D205).

In S206, the model building device 110 calculates differences between feature vectors D205 that are output from the skill level evaluating model for the task unit videos 1 to M. As a specific example, the model building device 110 may use what is called a loss function to calculate, as the differences, magnitudes of deviations (Losses) among the feature vectors D205 corresponding to the task unit videos 1 to M.

In S207, on a basis of the differences among the feature vectors D205 corresponding to the task unit videos 1 to M calculated in S206, the model building device 110 updates the skill level evaluating model that is used to derive the feature vectors D205 in S204. Specifically, as mentioned above, the model building device 110 updates the skill level evaluating model on a basis of the type of machine learning referred to as metric learning in such a manner that the differences among the feature vectors D205 are made smaller for workers belonging to a common group, and that the differences among the feature vectors D205 are made larger for worker belonging to different groups.

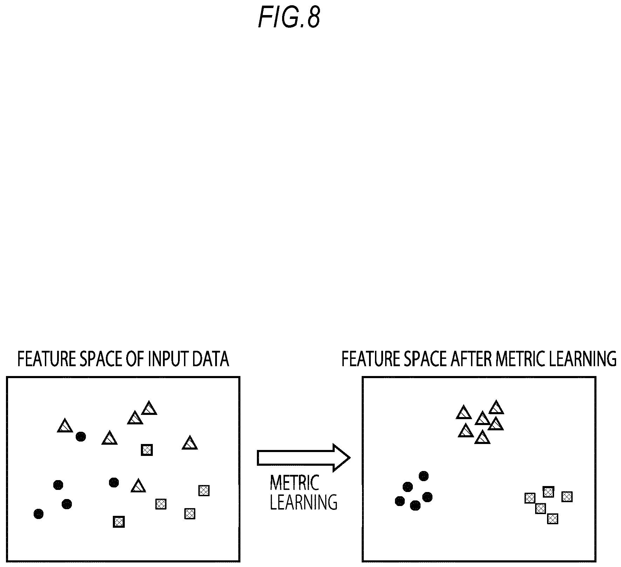

For example, Fig. 8 is an explanatory diagram for describing an example of processing pertaining to building the skill level evaluating model. In Fig. 8, markers having the same shape schematically represent positions in the feature space based on sets of features extracted from samples belonging to the same group (e.g., feature vectors D205 corresponding to workers belonging to the same group). A left diagram schematically illustrates a state of the feature space of input data before training is performed by the metric learning. A right diagram schematically illustrates a state of the feature space of input data after the training is performed by the metric learning.

As illustrated in the left diagram of Fig. 8, positions of samples are randomly dispersed in the feature space before the training irrespective of groups to which the samples belong. In contrast, as illustrated in the right diagram of Fig. 8, after the training, samples belonging to the same group are positioned closer to one another in the feature space, and samples belonging to groups different from one another are positioned farther from one another.

As seen from the above, the model building device 110 updates the skill level evaluating model by training the skill level evaluating model in the feature space in such a manner that differences among feature vectors are made smaller for samples belonging to the common group, and that differences among feature vectors are made larger for samples belonging to different groups. Note that, to the update of the skill level evaluating model as exemplified above, for example, a technique referred to as stochastic gradient descent is applicable.

Here, refer to Fig. 7 again. In S208, the model building device 110 determines whether a termination condition has been satisfied. As a specific example, the model building device 110 may determine that the termination condition has been satisfied when the series of task unit videos extracted from the task videos represented by the target image data items (the sample data items) have been subjected to processes of S203 to S207.

When determining in S208 that the termination condition has not been satisfied, the model building device 110 causes the processing to proceed to S203. In this case, the model building device 110 executes the processes of S203 to S207 on an image data item D102 on an input unit video that has not been subjected to the processes yet.

Then, when determining in S208 that the termination condition has been satisfied, the model building device 110 terminates the series of processes illustrated in Fig. 7.

As an example of the processing in the preprocessing stage, the processing pertaining to building the task video dividing model and the processing pertaining to building the skill level evaluating model have been individually described above with reference to Fig. 4 to Fig. 8.

(Post-processing Stage)

As an example of processing in a post-processing stage, processing pertaining to dividing a task video into task unit videos using the task video dividing model and processing pertaining to evaluating a skill level of a worker using the skill level evaluating model will be individually described.

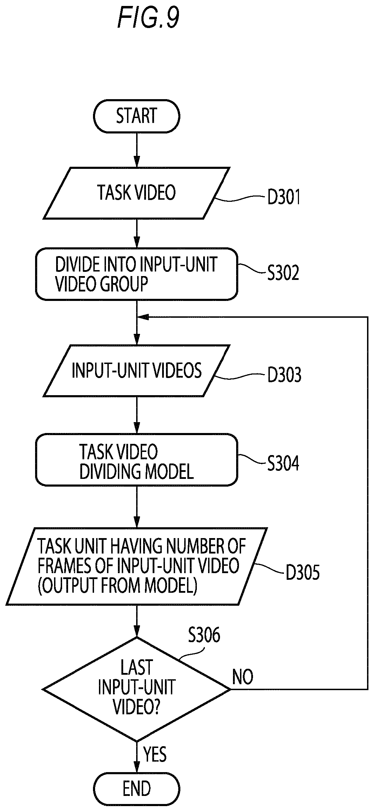

First, with reference to Fig. 9, an example of processing pertaining to dividing a task video into task unit videos using the task video dividing model by the evaluating device 150 will be described. Fig. 9 is a diagram illustrating the example of processing pertaining to dividing a task video into task unit videos using the task video dividing model by the evaluating device 150.

The evaluating device 150 obtains image data D301 to be processed and, in S302, divides a task video represented by the image data D301 into input unit videos each having a predetermined period (e.g., a predetermined number of frames). D303 represents image data items on a series of input unit videos into which the task video is divided in S302.

In S304, the evaluating device 150 sequentially extracts the image data items D303 on the series of input unit videos into which the task video is divided in S302, and inputs the image data items D303 into the task video dividing model. This causes the task video dividing model to output, for an image data item D303 on each of the series of input unit videos into which the task video represented by the image data D301 is divided, information that represents a result of inferring which task unit's performance situation is depicted by a scene imaged in the input unit video. D305 schematically represents an image data item on an input unit video that is labeled with information based on a result of inference by the task video dividing model, that is, information based on a result of inferring a task unit depicted by a scene imaged in the input unit video.

This enables a task unit video corresponding to a common task unit to be generated by combining a series of input unit videos labeled with information representing the task unit in chronological order.

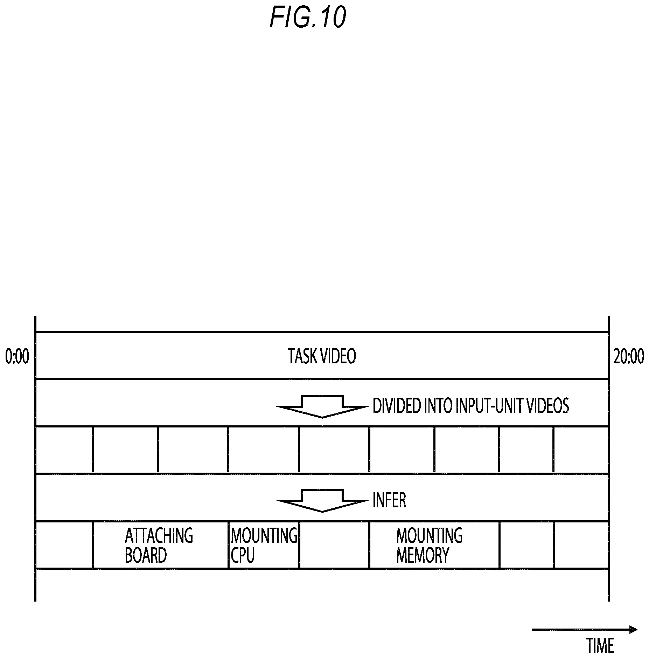

For example, Fig. 10 is a diagram illustrating an example of a result of processing pertaining to dividing a task video into task unit videos using the task video dividing model and illustrates an example of a processing result in a case where image data on a task video based on a result of imaging a performance situation of a series of tasks pertaining to assembling a PC is taken as a target.

After the task video is divided into the input unit videos, image data items on the series of input unit videos divided into are input into the task video dividing model, and thus the task video dividing model outputs, for image data items on the input unit videos corresponding to task units, information items that represent results of inferring the task units.

In the example illustrated in Fig. 10, out of the series of input unit videos divided into, input unit videos in which task situations "attaching a board," "mounting a CPU," and "mounting a memory," which are task units of a task of assembling the PC, are imaged are taken as a target, and information items that represent the corresponding task units are output as results of inference. In the example illustrated in Fig. 10, for two consecutive input unit videos in chronological order, a result of inference that scenes imaged in the input unit videos depict the task situation "attaching a board" is output. Therefore, in this case, a video into which the two input unit videos are combined in chronological order is a task unit video corresponding to "attaching a board." This holds true for a task unit indicated as "mounting a memory."

In the above manner, from the image data on the task video based on the result of imaging the performance situation of the series of tasks pertaining to assembling a PC, task unit videos corresponding to "attaching a board," "mounting a CPU," and "mounting a memory" can be divided into and extracted.

Here, refer to Fig. 9 again. In S306, the evaluating device 150 determines whether a last input unit video of the series of input unit videos into which the task video is divided in S302 has been subjected to a process of S304.

When determining in S306 that the last input unit video has not been subjected to the process of S304 yet, the evaluating device 150 causes the processing to proceed to S304. In this case, the evaluating device 150 executes the process of S304 on an image data item D303 on an input unit video that has not been subjected to the process yet.

Then, when determining in S306 that the last input unit video has been subjected to the process of S304, the evaluating device 150 terminates the series of processes illustrated in Fig. 9.

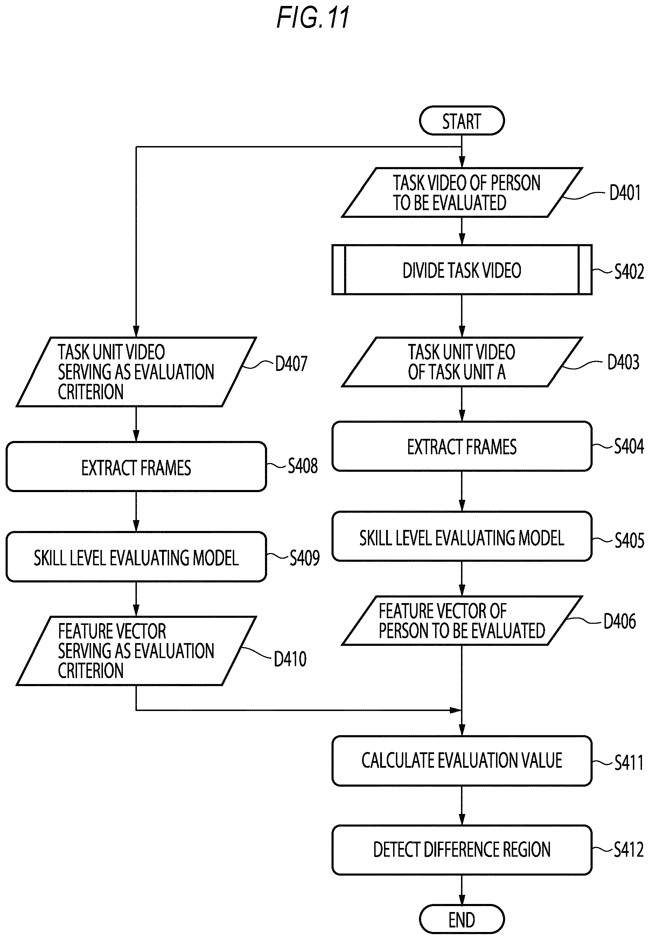

Next, with reference to Fig. 11, an example of processing pertaining to evaluating a skill level of a worker in a predetermined task by the evaluating device 150 using the skill level evaluating model will be described. Fig. 11 is a diagram illustrating the example of processing pertaining to evaluating a skill level of a worker in a predetermined task by the evaluating device 150 using the skill level evaluating model. Fig. 11 also illustrates an example of a case where a skill level of a worker to be evaluated in the task is evaluated by comparing performance situations of the task by the worker to be evaluated and a worker taken as an evaluation criterion who is set beforehand. Note that, as the worker taken as an evaluation criterion, for example, a worker equivalent to a skilled person is preferably set. Note that the worker taken as an evaluation criterion is equivalent to an example of a "second worker."

The evaluating device 150 obtains image data on a task video based on a result of imaging a performance situation of a series of tasks by the worker to be evaluated, executes processes of S402 to S405 and processes of S408 to S409 on the image data, and then executes processes of S411 to S412 on the image data. Hereinafter, the processes of S402 to S405 and the processes of S408 to S409 will be described, and then the processes of S411 to S412 will be described.

First, the processes of S402 to S405 will be described. The processes of S402 to S405 show an example of processing pertaining to deriving a feature vector (i.e., a position in a feature space) from the image data on the task video based on the result of imaging the performance situation of the tasks by the worker to be evaluated.

The evaluating device 150 obtains image data D401 on the task video of the worker to be evaluated and, in S402, divides the task video represented by the image data D401 into task unit videos. Subsequently, the evaluating device 150 extracts, from among image data items corresponding to the series of task unit videos into which the task video is divided, an image data item D403 on a task unit video corresponding to a task unit that is a target of the evaluation. Note that, in the example illustrated in Fig. 11, it is assumed that, with a task unit A being taken as a target, a skill level of the worker to be evaluated in the task unit A is evaluated. Therefore, in the example illustrated in Fig. 11, the evaluating device 150 extracts an image data item D403 on a task unit video corresponding to the task unit A, on a basis of a result of a process of S402.

In S404, the evaluating device 150 extracts, from the task unit video of the task unit A represented by the extracted image data item D403, frames to be input into the skill level evaluating model. At this time, the evaluating device 150 may extract a predetermined number of frames from the task unit video A such that an input dimension (in other words, the number of frames) for the skill level evaluating model is fixed and may control intervals between frames to be extracted so as to extract the predetermined number of frames.

In S405, the evaluating device 150 inputs image data items corresponding to the frames that are extracted in S404 from the task unit video of the task unit A into the skill level evaluating model. This causes the skill level evaluating model to output information that represents a position in a feature space based on features of the task unit video based on a result of imaging a performance situation of the task unit A by the worker to be evaluated (hereinafter, will be also referred to as a feature vector D406).

Next, the processes of S408 to S409 will be described. The processes of S408 to S409 show an example of processing pertaining to deriving a feature vector from image data on a task video based on a result of imaging a performance situation of the tasks by the worker taken as an evaluation criterion.

In S408, the evaluating device 150 extracts frames to be input into the skill level evaluating model from a task unit video serving as an evaluation criterion, that is, a task unit video of the task unit A represented by an image data item D407 based on a result of imaging a performance situation of the task unit A by the worker taken as an evaluation criterion. At this time, as in the process of S404, the evaluating device 150 may extract a predetermined number of frames from the task unit video A such that an input dimension (in other words, the number of frames) for the skill level evaluating model is fixed and may control intervals between frames to be extracted so as to extract the predetermined number of frames.

In S409, the evaluating device 150 inputs image data items corresponding to the frames that are extracted from the task unit video serving as an evaluation criterion (the task unit video of the task unit A) in S408 into the skill level evaluating model. This causes the skill level evaluating model to output information that represents a position in a feature space based on features of the task unit video serving as an evaluation criterion, that is, features of the task unit video based on the result of imaging the performance situation of the task unit A by the worker taken as an evaluation criterion (hereinafter, will be also referred to as a feature vector D410).

Note that the number of task unit videos serving as an evaluation criterion may be one or more. In a case where a plurality of task unit videos are used as evaluation criteria, a plurality of task unit videos corresponding to a predetermined worker may be used, or task unit videos corresponding to a plurality of workers belonging to a common group (e.g., a plurality of workers equivalent to skilled persons) may be used.

Next, the processes of S411 to S412 will be described. The processes of S411 to S412 show an example of processing pertaining to evaluating the skill level of the worker to be evaluated in the task unit A and pertaining to presenting information based on a result of the evaluation.

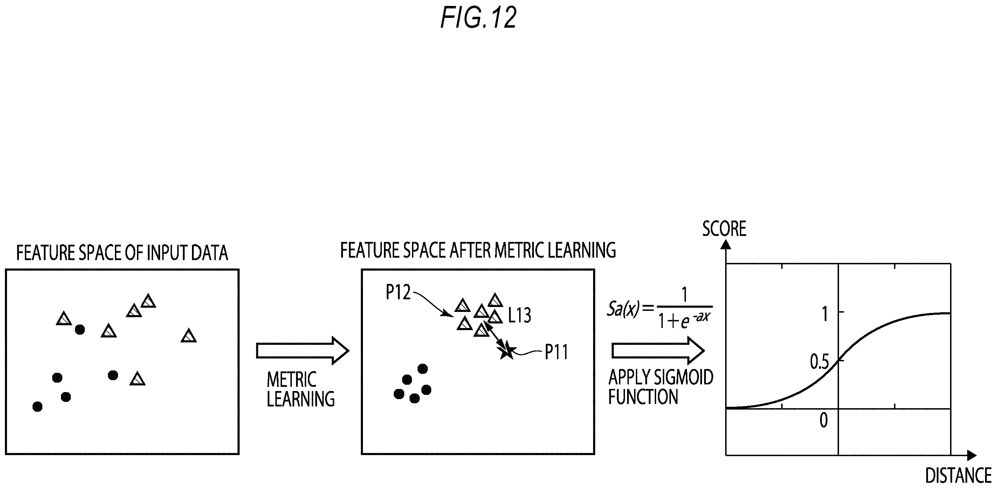

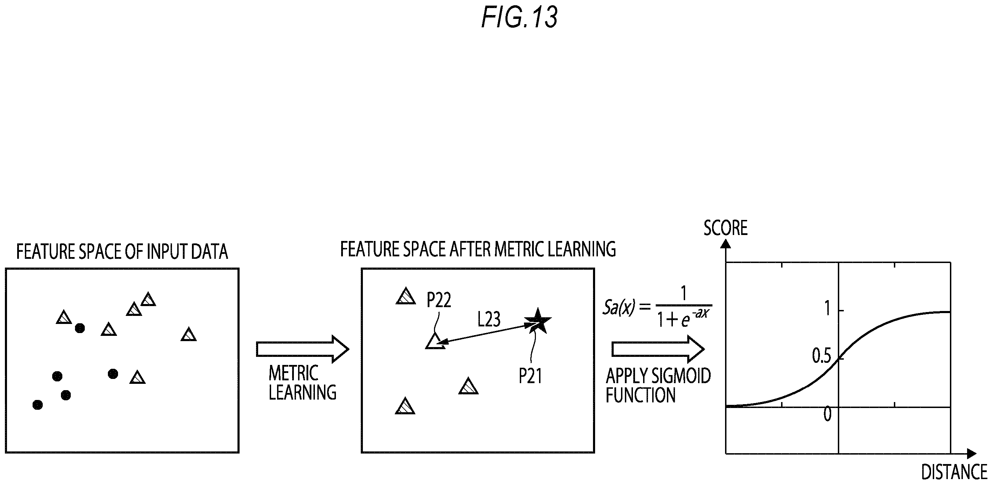

In S411, the evaluating device 150 calculates an evaluation value for evaluating the skill level of the worker to be evaluated in the task unit A on a basis of the feature vector D406 corresponding to the worker based on the output from the skill level evaluating model in S405. As a specific example, the evaluation processing unit 154 may calculate the evaluation value in accordance with a positional relationship in the feature space between the feature vector D406 corresponding to the worker to be evaluated and the feature vector D410 corresponding to the worker taken as an evaluation criterion. Here, with reference to Fig. 12 and Fig. 13, a method of calculating an evaluation value of a skill level of the worker to be evaluated in a predetermined task will be described with a specific example.

First, an example illustrated in Fig. 12 will be described. The example illustrated in Fig. 12 shows an example of a method of calculating an evaluation value pertaining to evaluating the skill level of the worker to be evaluated in the predetermined task (e.g., a task unit) with each of a series of workers belonging to a predetermined group (e.g., skilled persons) being taken as an evaluation criterion.

As mentioned above, by performing training with the feature space by the metric learning, differences in features among a plurality of image data items corresponding to the common task unit are made smaller for workers belonging to a common group. That is, in this case, for the workers belonging to the common group, distances between positions in the feature space represented by feature vectors corresponding to the workers are made shorter. In contrast, differences in features among a plurality of image data items corresponding to the common task unit are made larger for workers belonging to different groups. That is, in this case, for the workers belonging to the different groups, distances between positions in the feature space represented by feature vectors corresponding to the workers are made longer.

Using such characteristics, the evaluating device 150 calculates the evaluation value pertaining to evaluating the skill level of the worker to be evaluated in the predetermined task (e.g., the task unit A) on a basis of the feature vector D406 corresponding to the worker.

Specifically, in the example illustrated in Fig. 12, the evaluating device 150 first calculates a centroid P12 of positions in the feature space that are represented by feature vectors D410 corresponding to a plurality of workers belonging to a group taken as an evaluation criterion (e.g., a group of skilled persons). Next, the evaluating device 150 calculates a distance (e.g., a Euclidean distance, a Mahalanobis distance, etc.) L13 in the feature space between the calculated centroid P12 and a position P11 in the feature space that is represented by the feature vector D406 corresponding to the worker to be evaluated. Next, the evaluating device 150 uses a Sigmoid function or the like to normalize a result of calculating the distance L13 in the feature space between the centroid P12 and the position P11 to a value within a range from 0 to 1 inclusive and multiplies the value by 100 to express the value as a score from 0 to 100 inclusive. For example, the Sigmoid function used for the normalization is given by a mathematical relation as shown below as (Formula 1). Note that a parameter a (gain) in (Formula 1) is preferably determined beforehand in accordance with characteristics of a task unit that is a target of the evaluation.

[Math. 1]

$$\varsigma_a(x) = \frac{1}{1 + e^{-ax}}$$

... (Formula 1)

This causes the skill level of the worker to be evaluated in the predetermined task to be expressed as a score up to 100 points, from 0 to 100 inclusive. Specifically, the shorter the distance between the centroid P12 and the position P11, the smaller the difference in feature vector between the worker belonging to the group taken as an evaluation criterion and the worker to be evaluated, and the higher the score of the skill level pertaining to the evaluation up to 100 points. In contrast, the longer the distance between the centroid P12 and the position P11, the larger the difference in feature vector between the worker belonging to the group taken as an evaluation criterion and the worker to be evaluated, and the lower the score of the skill level pertaining to the evaluation down to 0 points.

Next, an example illustrated in Fig. 13 will be described. The example illustrated in Fig. 13 shows an example of a method of calculating an evaluation value pertaining to evaluating the skill level of the worker to be evaluated in the predetermined task (e.g., a task unit) with a predetermined worker (e.g., a skilled person) being taken as an evaluation criterion.

In the exampled illustrated in Fig. 13, the evaluating device 150 calculates a distance L23 in a feature space between a position P22 in the feature space represented by the feature vector D410 corresponding to the worker taken as an evaluation criterion (e.g., a skilled person) and a position P21 in the feature space represented by the feature vector D406 corresponding to the worker to be evaluated. Subsequently, the evaluating device 150 uses a Sigmoid function or the like to normalize a result of calculating the distance L23 in the feature space between the position P22 and the position P21 to a value within a range from 0 to 1 inclusive and multiplies the value by 100 to express the value as a score from 0 to 100 inclusive. Note that a method for the normalization is substantially the same as in the example described with reference to Fig. 12, and thus detailed description thereof will be omitted.

This causes the skill level of the worker to be evaluated in the predetermined task to be expressed as a score up to 100 points, from 0 to 100 inclusive. Specifically, the shorter the distance between the position P22 and the position P21, the smaller the difference in feature vector between the worker taken as an evaluation criterion and the worker to be evaluated, and the higher the score of the skill level pertaining to the evaluation up to 100 points. In contrast, the longer the distance between the position P22 and the position P21, the larger the difference in feature vector between the worker taken as an evaluation criterion and the worker to be evaluated, and the lower the score of the skill level pertaining to the evaluation down to 0 points.

In the above manner, the evaluating device 150 can evaluate, for each task unit for example, a skill level of the worker to be evaluated in the task unit on a basis of the score calculated in S411.

In addition, by the scheme as described above, for example, it is also possible to evaluate a skill level in a series of tasks as a whole by obtaining a result of evaluating a skill level for each of one or more task units constituting the series of tasks.

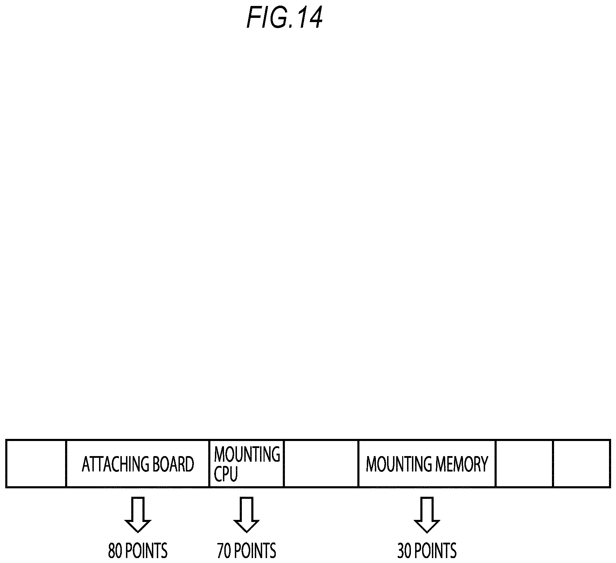

For example, Fig. 14 is an explanatory diagram for describing an example of a method of evaluating a skill level in a series of tasks and illustrates an example of a result of evaluating a skill level in a series of tasks pertaining to assembling a PC. Specifically, in the example illustrated in Fig. 14, in a task video used to evaluate the skill level, performance situations of "attaching a board," "mounting a CPU," and "mounting a memory" are imaged, out of a series of task units constituting the tasks pertaining to assembling a PC. Therefore, task unit videos corresponding to "attaching a board," "mounting a CPU," and "mounting a memory" are extracted, and on a basis of the task unit videos, a score pertaining to evaluating a skill level is calculated for each task unit. This enables, for example, the evaluating device 150 to evaluate, on a basis of results of evaluating the skill levels in "attaching a board," "mounting a CPU," and "mounting a memory," a skill level in the series of tasks pertaining to assembling the PC, including these task units, as a whole.

In the above manner, the evaluating device 150 evaluates the skill level of the worker to be evaluated in the predetermined task and outputs information based on a result of the evaluation to a predetermined output destination. For example, the evaluating device 150 may transmit the information based on the result of evaluating the skill level of the worker to be evaluated in the predetermined task to the terminal device 200 connected to the evaluating device 150 via the network, thus presenting the information based on the result of the evaluation to a manager via the terminal device 200.

Here, refer to Fig. 11 again. In S412, in an image represented by image data used to evaluate the skill level of the worker to be evaluated, the evaluating device 150 detects a region where a performance situation of the task differs between the worker to be evaluated and the worker taken as an evaluation criterion, as a difference region.

Specifically, the evaluating device 150 calculates ratios of contribution of regions in a still image corresponding to each of frames of a video represented by the image data used to evaluate the skill level of the worker to be evaluated, to the evaluation. At this time, the evaluating device 150 calculates a ratio of contribution of a difference between feature vectors that are output from the skill level evaluating model for the worker to be evaluated and the worker taken as an evaluation criterion, to the evaluation. Note that, for the calculation of the ratio of contribution, a known technique such as GradCAM can be used as mentioned above. By calculating the ratio of contribution in the above manner, it is possible to extract, from among the regions in the still image corresponding to each of the frames, a region where the ratio of contribution indicates a higher value, as the region where a performance situation of the task differs between the worker to be evaluated and the worker taken as an evaluation criterion.

When a difference region is extracted from a target image (e.g., a still image corresponding to each frame) in the above manner, the evaluating device 150 may superimpose information based on a result of extracting the difference region on the image.

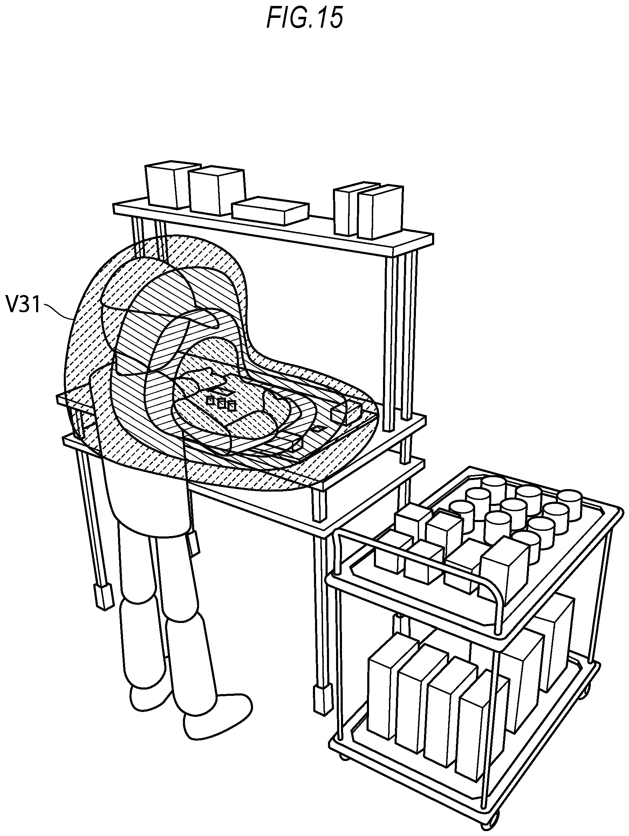

For example, Fig. 15 is a diagram illustrating an example of a method of outputting information based on a result of extracting a difference region. In the example illustrated in Fig. 15, the evaluating device 150 displays and superimposes indication information V31 that indicates the difference region, at a location corresponding to the difference region in a still image that is a source of extracting the difference region. At this time, the evaluating device 150 may also control a display mode (e.g., a difference in color, a difference in luminance, etc.) of the indication information V31 to be superimposed on a part (e.g., pixels) that is a source of calculating the ratio of contribution, in accordance with the ratio of contribution used to extract the difference region. As a specific example, in the example illustrated in Fig. 15, the evaluating device 150 controls colors of regions in the indication information V31 in accordance with ratios of contribution calculated for the regions. This enables, for example, a manager to distinguish a region that contributes more to evaluation of a skill level of a target worker from among regions in a target image in accordance with a difference in display mode (e.g., a difference in color) of the indication information V31 displayed superimposed on the image.

An example of the processing by the information processing system according to the present embodiment has been described above, divided into the preprocessing stage and the main processing stage, with reference to Fig. 4 to Fig. 15.

<Modification>

A modification of the information processing system according to the present embodiment will be described. In the present modification, an example of a scheme for enabling evaluation of an order of performing a series of task units constituting a predetermined task (in other words, a procedure of the task) when a worker to be evaluated (e.g., an unskilled person) performs the task will be described.

As described with reference to Fig. 9 and Fig. 10, after a task video is divided into input unit videos, image data items on the series of input unit videos divided into are input into the task video dividing model, and thus the task video dividing model outputs, for image data items on the input unit videos corresponding to task units, information items that represent results of inferring the task units. For example, in the example illustrated in Fig. 10, out of the series of input unit videos divided into, input unit videos in which task situations "attaching a board," "mounting a CPU," and "mounting a memory," which are task units of a task of assembling a PC, are imaged are taken as a target, and information items that represent the corresponding task units are output as results of inference. That is, the example illustrated in Fig. 10 shows that the task units indicated as "attaching a board," "mounting a CPU," and "mounting a memory" are performed in this order as the task of assembling the PC.

Using the characteristics as mentioned above, the evaluating device 150 according to the present modification may evaluate, for example, whether a procedure of performing a predetermined task by a worker to be evaluated is a correct procedure.

As a specific example, the evaluating device 150 uses the task video dividing model to divide a task video based on a result of imaging a performance situation of the predetermined task into task unit videos for each of the worker to be evaluated (e.g., an unskilled person) and a worker taken as an evaluation criterion (e.g., a skilled person). The evaluating device 150 compares orders of playback of the task unit videos corresponding to the series of task units into which the task video is divided and that constitute the task between the worker to be evaluated and the worker taken as an evaluation criterion. Subsequently, on a basis of a result of the comparison, the evaluating device 150 tries extracting a difference in order of performing the series of task units between the worker to be evaluated and the worker taken as an evaluation criterion.

This enables the evaluating device 150 to evaluate whether the procedure pertaining to performing the predetermined task by the worker to be evaluated is the correct procedure, in accordance with whether a difference in order of performing the series of task units is extracted. At this time, the evaluating device 150 may also evaluate a skill level of the worker to be evaluated in the task in accordance with a degree of discrepancy between the procedure of the task by the worker to be evaluated and the procedure of the task by the worker taken as an evaluation criterion.

As a modification, an example of a scheme for enabling evaluation of an order of performing a series of task units constituting a predetermined task when a worker to be evaluated performs the task has been described above.

<Conclusion>

As described above, an information processing device according to an embodiment of the present disclosure builds a first trained model by training, on a basis of machine learning using, as training data items, second image data items on partial videos corresponding to respective task units constituting a series of tasks into which first image data on a series of videos based on results of imaging performance situations of a series of tasks by each of a plurality of workers categorized into a plurality of groups different from one another is divided, the first trained model in a feature space regarding a relationship among a plurality of image data items in such a manner that, for workers belonging to the common group, differences in features among a plurality of the second image data items corresponding to a common task unit are made smaller, and for workers belonging to different groups, differences in features among the plurality of the second image data items corresponding to the common task unit are made larger. Subsequently, on a basis of the first trained model and first image data on a series of videos based on a result of imaging a performance situation of the series of tasks by a worker to be evaluated, a skill level of the worker in the series of tasks is evaluated.

With such a configuration, for example, it is possible to quantitatively evaluate a difference in performance situation of a common task between a worker taken as an evaluation criterion (e.g., a skilled person) and a worker to be evaluated (e.g., an unskilled person) as a difference in features between image data items corresponding to the workers. This allows, for example, an expectation of an effect of improving a skill level of an unskilled person (a worker to be evaluated) in a task, by giving feedback about a result of evaluating skill levels in various tasks to the unskilled person or a manager pertaining to managing the task, without direct instruction from a skilled person to the unskilled person. In this manner, the information processing system according to the present embodiment can assist in passing down techniques in a preferable mode.

Note that the embodiment mentioned above is merely an example, does not necessarily limit the configuration and the processing according to the present invention, and may be subjected to various modifications and variations without departing from the technical idea of the present invention.

In addition, the present invention includes a program that implements functions of the embodiment mentioned above and a non-transitory computer-readable recording medium storing the program.

REFERENCE SIGNS LIST

1 information processing system
110 model building device
111 communicating unit
112 input-output controlling unit
113 model building unit
114 labeling processing unit
115 task video dividing model building unit
116 skill level evaluating model building unit
117 storage unit
150 evaluating device
151 communicating unit
152 input-output controlling unit
153 division processing unit
154 evaluation processing unit
155 contribution ratio calculating unit
156 image processing unit
157 storage unit
200 terminal device
310 imaging device

**Claims**

**1.** An information processing device comprising

a first model builder configured to build a first trained model by training, on a basis of machine learning using, as training data items, second image data items on partial videos corresponding to respective task units constituting a series of tasks into which first image data on a series of videos based on a result of imaging a performance situation of the series of tasks by each of a plurality of workers categorized into a plurality of groups different from one another is divided, the first trained model in a feature space regarding a relationship among a plurality of image data items in such a manner that, for workers belonging to a common group, differences in feature among a plurality of the second image data items corresponding to a common task unit are made smaller, and for workers belonging to different groups, differences in feature among the plurality of the second image data items corresponding to the common task unit are made larger, wherein

on a basis of the first trained model and the first image data on a series of videos based on a result of imaging a performance situation of a series of tasks by a first worker to be evaluated, a skill level of the worker in the series of tasks is evaluated.

2. The information processing device according to claim 1, comprising an evaluator configured to evaluate a skill level of the first worker in the series of tasks on a basis of the first trained model, the first image data on the series of videos based on the result of imaging the performance situation of the series of tasks by the first worker, and the first image data on a series of videos based on a result of imaging a performance situation of the series of tasks by a second worker belonging to a predetermined group of the plurality of groups.

3. The information processing device according to claim 2, comprising:

an associator configured to associate the second image data items corresponding to respective task units constituting the series of tasks with auxiliary information items that represent the task units, the second image data items being second image data items into which the first image data corresponding to each of the plurality of workers categorized into the plurality of groups is divided; and

a second model builder configured to build a second trained model on a basis of machine learning using, as training data items, the second image data items associated with the auxiliary information items, the second trained model being configured to infer task units constituting a series of tasks imaged in a video represented by image data being input, wherein

the evaluator:

inputs the first image data on the series of videos based on a result of imaging a performance situation of a series of tasks by the first worker into the second trained model, to divide the first image data into the second image data items on task units constituting the series of tasks; and

evaluates a skill level of the first worker in the series of tasks performed by the first worker on a basis of a first feature and a second feature, the first feature being obtained by inputting the second image data items on task units into the first trained model, the second image data items being second image data items into which the first image data is divided, the second feature being obtained by inputting the second image data items corresponding to the task units by the second worker into the first trained model.

4. The information processing device according to claim 3, wherein the first model builder:

inputs the first image data corresponding to each of the plurality of workers categorized into the plurality of groups into the second trained model, to divide the first image data into the second image data items on task units on a basis of information output from the second trained model; and

builds the first trained model on a basis of machine learning using, as training data items, the divided second image data items.

5. The information processing device according to claim 4, wherein the evaluator inputs each of third image data items into the second trained model to divide the first image data into the second image data items on task units on a basis of information output from the second trained model for each of the third image data items, and the first image data on the series of videos based on the result of imaging the performance situation of the series of tasks by the first worker is divided for each predetermined period into the third image data items.

6. The information processing device according to any one of claims 3 to 5, wherein the evaluator evaluates the skill level of the first worker in the series of tasks performed by the first worker, on a basis of the first feature and a centroid of the second feature in the feature space, the first feature corresponding to the first image data based on the result of imaging the performance situation of the series of tasks by the first worker, the second feature corresponding to the first image data based on a result of imaging a performance situation of the series of tasks by each of a series of the second workers belonging to the predetermined group.

7. The information processing device according to any one of claims 3 to 5, wherein the evaluator evaluates the skill level of the first worker in the series of tasks performed by the first worker, on a basis of the first feature and the second feature, the first feature corresponding to the first image data based on the result of imaging the performance situation of the series of tasks by the first worker, the second feature corresponding to the first image data based on a result of imaging a performance situation of the series of tasks by the second worker being at least one or some of workers belonging to the predetermined group.

8. The information processing device according to any one of claims 3 to 7, wherein the evaluator evaluates the skill level of the first worker in the series of tasks performed by the first worker, on a basis of a distance in the feature space between the first feature and the second feature.

9. The information processing device according to any one of claims 3 to 8, comprising:

   a calculator configured to calculate a ratio of contribution of each of parts of a still image to a result of evaluating the skill level of the first worker in the series of tasks performed by the first worker based on the first feature and the second feature, the still image corresponding to each of at least one or some of frames of a video corresponding to the first image data based on the result of imaging the performance situation of the series of tasks by the first worker; and
   an output controller configured to perform control such that information based on a result of calculating the ratio of contribution is output linked to a region in the still image, the region being a source of calculating the ratio of contribution.

10. The information processing device according to claim 9, wherein the output controller performs control such that indication information based on the result of calculating the ratio of contribution is displayed superimposed on the region in the still image, and the region is the source of calculating the ratio of contribution.

11. An information processing method to be executed by an information processing device, the information processing method comprising

   a first model building step of building a first trained model by training, on a basis of machine learning using, as training data items, second image data items on partial videos corresponding to respective task units constituting a series of tasks into which first image data on a series of videos based on a result of imaging a performance situation of the series of tasks by each of a plurality of workers categorized into a plurality of groups different from one another is divided, the first trained model in a feature space regarding a relationship among a plurality of image data items in such a manner that, for workers belonging to a common group, differences in feature among a plurality of the second image data items corresponding to a common task unit are made smaller, and for workers belonging to different groups, differences in feature among the plurality of the second image data items corresponding to the common task unit are made larger, wherein
   on a basis of the first trained model and the first image data on a series of videos based on a result of imaging a performance situation of a series of tasks by a first worker to be evaluated, a skill level of the worker in the series of tasks is evaluated.

12. A program causing a computer to execute

   a first model building step of building a first trained model by training, on a basis of machine learning using, as training data items, second image data items on partial videos corresponding to respective task units constituting a series of tasks into which first image data on a series of videos based on a result of imaging a performance situation of the series of tasks by each of a plurality of workers categorized into a plurality of groups different from one another is divided, the first trained model in a feature space regarding a relationship among a plurality of image data items in such a manner that, for workers belonging to a common group, differences in feature among a plurality of the second image data items corresponding to a common task unit are made smaller, and for workers belonging to different groups, differences in feature among the plurality of the second image data items corresponding to the common task unit are made larger, wherein
   on a basis of the first trained model and the first image data on a series of videos based on a result of imaging a performance situation of a series of tasks by a first worker to be evaluated, a skill level of the worker in the series of tasks is evaluated.

13. An information processing system comprising:

a first model builder configured to build a first trained model by training, on a basis of machine learning using, as training data items, second image data items on partial videos corresponding to respective task units constituting a series of tasks into which first image data on a series of videos based on a result of imaging a performance situation of the series of tasks by each of a plurality of workers categorized into a plurality of groups different from one another is divided, the first trained model in a feature space regarding a relationship among a plurality of image data items in such a manner that, for workers belonging to a common group, differences in feature among a plurality of the second image data items corresponding to a common task unit are made smaller, and for workers belonging to different groups, differences in feature among the plurality of the second image data items corresponding to the common task unit are made larger; and

an evaluator configured to evaluate a skill level of a first worker to be evaluated in a series of tasks on a basis of the first trained model and the first image data on a series of videos based on a result of imaging a performance situation of the series of tasks by the worker.

# FIG.1

*FIG.2*

900

INFORMATION PROCESSING DEVICE

980

910 — CPU

920 — ROM

930 — RAM

940 — AUXILIARY STORAGE DEVICE

OUTPUTTING DEVICE — 950

INPUTTING DEVICE — 960

NETWORK I/F — 970

# FIG.3

1

| TERMINAL DEVICE | ~200 |

| IMAGING DEVICE | ~310 |

N1

110

150

**MODEL BUILDING DEVICE**

- 111 — COMMUNICATING UNIT
- 112 — INPUT-OUTPUT CONTROLLING UNIT
- 113 — MODEL BUILDING UNIT
  - 114 — LABELING PROCESSING UNIT
  - 115 — TASK VIDEO DIVIDING MODEL BUILDING UNIT
  - 116 — SKILL LEVEL EVALUATING MODEL BUILDING UNIT
- 117 — STORAGE UNIT

**EVALUATING DEVICE**

- COMMUNICATING UNIT — 151
- INPUT-OUTPUT CONTROLLING UNIT — 152
- DIVISION PROCESSING UNIT — 153
- EVALUATION PROCESSING UNIT — 154
- CONTRIBUTION RATIO CALCULATING UNIT — 155
- IMAGE PROCESSING UNIT — 156
- STORAGE UNIT — 157

## FIG.4

```
                    ┌─────────────┐
                    │    START    │
                    └──────┬──────┘
                           ↓
              ┌──────────────────────────┐
              │ DIVIDE TASK VIDEO INTO   │──S101
              │ INPUT-UNIT VIDEOS        │
              └───────────┬──────────────┘
                          ↓
                 ╱─────────────────╱
                ╱ INPUT-UNIT VIDEOS ╱──D102
               ╱─────────────────╱
                          ↓
              ┌──────────────────────────┐
              │    TASK VIDEO            │──S103
              │    DIVIDING MODEL        │
              └───────────┬──────────────┘
                          ↓
   ╱─────────────────────╱          ╱─────────────────────╱
  ╱ TASK UNIT HAVING     ╱         ╱ TASK UNIT HAVING     ╱
 ╱ NUMBER OF FRAMES OF   ╱──D105  ╱ NUMBER OF FRAMES OF   ╱──D104
╱ INPUT-UNIT VIDEO       ╱       ╱ INPUT-UNIT VIDEO       ╱
╱ (LABELED)             ╱       ╱ (OUTPUT FROM MODEL)    ╱
╱─────────────────────╱        ╱─────────────────────╱
                          ↓
              ┌──────────────────────────┐
              │    LOSS FUNCTION         │──S106
              └───────────┬──────────────┘
                          ↓
              ┌──────────────────────────┐
              │  UPDATE TASK VIDEO       │──S107
              │  DIVIDING MODEL          │
              └───────────┬──────────────┘
                          ↓
                        ◇ S108
                 ╱─────────────╲
                ╱  TERMINATION  ╲    NO
                ╲  CONDITION    ╱────────
                 ╲  SATISFIED? ╱
                   ╲─────────╱
                       │ YES
                       ↓
                 ┌─────────────┐
                 │     END     │
                 └─────────────┘
```

## FIG.5

| 0:00 | TASK VIDEO | 20:00 |

DIVIDED INTO INPUT-UNIT VIDEOS

TIME

## FIG.6

| 0:00 | TASK VIDEO A | 20:00 |

| ATTACHING BOARD | MOUNTING CPU | MOUNTING MEMORY | CONNECTING SATA CABLES |

| 0:00 | TASK VIDEO B | 18:00 |

| ATTACHING BOARD | MOUNTING CPU | MOUNTING MEMORY | CONNECTING SATA CABLES |

TIME

## FIG.7

```
                    ┌─────────┐
                    │  START  │
                    └─────────┘
                         │
                         ▼
            ┌──────────────────────┐
            │ EXTRACT TASK         │
            │ UNIT VIDEOS          │── S201
            │ FROM TASK VIDEO      │
            └──────────────────────┘
                         │
        ┌────────────────┴─────────────────────┐
        ▼                                       ▼
   ╱──────────────╲                        ╱──────────────╲
  ╱ TASK UNIT VIDEO 1 ╲── D202  · · · · · ╱  TASK UNIT     ╲── D202
 ╱────────────────────╲                  ╱   VIDEO M        ╲
        │                                       │
        ▼                                       ▼
   ┌──────────────┐                       ┌──────────────┐
   │ EXTRACT FRAMES │── S203  · · · · · · │ EXTRACT FRAMES │── S203
   └──────────────┘                       └──────────────┘
        │                                       │
        ▼                                       ▼
   ┌──────────────┐                       ┌──────────────┐
   │ SKILL LEVEL  │── S204  · · · · · · · │ SKILL LEVEL  │── S204
   │ EVALUATING MODEL │                   │ EVALUATING MODEL │
   └──────────────┘                       └──────────────┘
        │                                       │
        ▼                                       ▼
  ╱────────────────╲                      ╱────────────────╲
 ╱ FEATURE VECTOR OF ╲── D205 · · · · · · ╱ FEATURE VECTOR OF ╲── D205
╱  TASK UNIT VIDEO 1  ╲                  ╱  TASK UNIT VIDEO M  ╲
        │                                       │
        └───────────────┬───────────────────────┘
                        ▼
                 ┌──────────────┐
                 │ LOSS FUNCTION │── S206
                 └──────────────┘
                        │
                        ▼
                 ┌──────────────┐
                 │ UPDATE SKILL LEVEL │── S207
                 │ EVALUATING MODEL │
                 └──────────────┘
                        │
                        ▼                S208
                    ╱─────────╲
                   ╱ TERMINATION ╲   NO
                  ╱  CONDITION    ╲────────┐
                  ╲  SATISFIED?   ╱        │
                   ╲─────────────╱         │
                        │ YES              │
                        ▼                  │
                    ┌─────────┐            │
                    │   END   │            │
                    └─────────┘            │
```

# FIG.8

FEATURE SPACE OF INPUT DATA

METRIC LEARNING

FEATURE SPACE AFTER METRIC LEARNING

# FIG.9

```
              ┌─────────────┐
              │    START    │
              └─────────────┘
                     │
                     ▼
            ╱─────────────────╲
           ╱    TASK VIDEO     ╱──── D301
          ╱─────────────────╱
                     │
                     ▼
          ┌───────────────────┐
          │ DIVIDE INTO INPUT-│──── S302
          │  UNIT VIDEO GROUP │
          └───────────────────┘
                     │
                     ▼  ◄──────────────────────┐
           ╱─────────────────╲                 │
          ╱  INPUT-UNIT VIDEOS ╱──── D303       │
         ╱─────────────────╱                    │
                     │                          │
                     ▼                          │
          ┌───────────────────┐                 │
          │    TASK VIDEO     │──── S304        │
          │  DIVIDING MODEL   │                 │
          └───────────────────┘                 │
                     │                          │
                     ▼                          │
      ╱─────────────────────────────╲           │
     ╱ TASK UNIT HAVING NUMBER OF    ╱           │
    ╱  FRAMES OF INPUT-UNIT VIDEO   ╱──── D305   │
   ╱   (OUTPUT FROM MODEL)        ╱              │
  ╱─────────────────────────────╱                │
                     │                          │
                     ▼     S306                  │
                 ╱───────╲                       │
                ╱  LAST   ╲      NO              │
               ╱ INPUT-UNIT ╲─────────────────────┘
                ╲  VIDEO?  ╱
                 ╲───────╱
                     │ YES
                     ▼
              ┌─────────────┐
              │     END     │
              └─────────────┘
```

# FIG.10

## FIG.11

```
                                    ( START )
                                        │
                                        ▼
                          ┌──────────────────────────┐
                          / TASK VIDEO OF PERSON      /──D401
                          / TO BE EVALUATED           /
                          └──────────────────────────┘
                                        │
                                        ▼
                          ║┌──────────────────────┐║
                          ║│   DIVIDE TASK VIDEO   │║──S402
                          ║└──────────────────────┘║
                                        │
                                        ▼
  ┌──────────────────────┐   ┌──────────────────────┐
  / TASK UNIT VIDEO       /    / TASK UNIT VIDEO      /──D403
  / SERVING AS EVALUATION /    / OF TASK UNIT A       /
  / CRITERION             /──D407 └────────────────────┘
  └──────────────────────┘              │
            │                           ▼
            ▼                 ┌──────────────────────┐
  ┌──────────────────────┐   │    EXTRACT FRAMES     │──S404
  │   EXTRACT FRAMES      │──S408 └───────────────────┘
  └──────────────────────┘              │
            │                           ▼
            ▼                 ┌──────────────────────┐
  ┌──────────────────────┐   │ SKILL LEVEL EVALUATING MODEL │──S405
  │ SKILL LEVEL EVALUATING MODEL │──S409 └──────────────┘
  └──────────────────────┘              │
            │                           ▼
            ▼                 ┌──────────────────────┐
  ┌──────────────────────┐   / FEATURE VECTOR OF     /──D406
  / FEATURE VECTOR        /    / PERSON TO BE EVALUATED /
  / SERVING AS EVALUATION /    └──────────────────────┘
  / CRITERION             /──D410          │
  └──────────────────────┘                 │
            │                               ▼
            └──────────────────────▶┌──────────────────────┐
                                    │ CALCULATE EVALUATION VALUE │──S411
                                    └──────────────────────┘
                                              │
                                              ▼
                                    ┌──────────────────────┐
                                    │ DETECT DIFFERENCE REGION │──S412
                                    └──────────────────────┘
                                              │
                                              ▼
                                          ( END )
```

FIG.12

FEATURE SPACE OF INPUT DATA

FEATURE SPACE AFTER METRIC LEARNING

METRIC
LEARNING

P12

L13

P11

$$Sa(x) = \frac{1}{1+e^{-ax}}$$

APPLY SIGMOID
FUNCTION

SCORE

1

0.5

0

DISTANCE

EP 4 481 714 A1

## FIG.13

FEATURE SPACE OF INPUT DATA

FEATURE SPACE AFTER METRIC LEARNING

P22

L23

P21

METRIC
LEARNING

$$Sa(x) = \frac{1}{1+e^{-ax}}$$

APPLY SIGMOID
FUNCTION

SCORE

1

0.5

0

DISTANCE

*FIG.14*

| | ATTACHING BOARD | MOUNTING CPU | | MOUNTING MEMORY | | |
|---|---|---|---|---|---|---|

⇩ ⇩ ⇩

80 POINTS    70 POINTS       30 POINTS

FIG.15

<table>
<tr><td colspan="2" align="center"><b>INTERNATIONAL SEARCH REPORT</b></td><td colspan="2">International application No.<br><br><b>PCT/JP2022/042033</b></td></tr>
</table>

| A. | CLASSIFICATION OF SUBJECT MATTER |
|---|---|

*G09B 9/00*(2006.01)i; *G09B 19/00*(2006.01)i; *G06T 7/00*(2017.01)i
FI:   G06T7/00 350B; G09B19/00 H; G09B9/00 Z

According to International Patent Classification (IPC) or to both national classification and IPC

| B. | FIELDS SEARCHED |
|---|---|

Minimum documentation searched (classification system followed by classification symbols)

G09B9/00; G09B19/00; G06T7/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | WO 2020/235804 A1 (NAVER CORPORATION) 26 November 2020 (2020-11-26)<br>  entire text, all drawings | 1-13 |
| A | WO 2018/154709 A1 (MITSUBISHI ELECTRIC CORPORATION) 30 August 2018 (2018-08-30)<br>  entire text, all drawings | 1-13 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 December 2022** | **13 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/042033**

| Patent document cited in search report | | | Publication date (day/month/year) | Patent family member(s) | | | Publication date (day/month/year) |
|---|---|---|---|---|---|---|---|
| WO | 2020/235804 | A1 | 26 November 2020 | JP | 2022-532772 | A | |
| | | | | entire text, all drawings | | | |
| | | | | KR | 10-2020-0132469 | A | |
| WO | 2018/154709 | A1 | 30 August 2018 | US | 2019/0370982 | A1 | |
| | | | | entire text, all drawings | | | |
| | | | | TW | 201832182 | A | |
| | | | | KR | 10-2019-0099537 | A | |
| | | | | CN | 110291559 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020144233 A